# FASCICULE DE BREVET EUROPEEN

(11) **EP 0 767 618 B1**
(45) Date de publication et mention de la délivrance du brevet: **01.09.1999**
(21) Numéro de dépôt: 95924372.6
(22) Date de dépôt: 27.06.1995
(51) Int. Cl.: A47J 37/04

(54) **APPAREIL DE CUISSON ELECTRIQUE D'ALIMENTS PRECUITS, SURGELES OU FRAIS DE TYPE FRITEUSE SANS BAIN D'HUILE**
FRITIERFETTLOSES ELEKTRISCHES BACKGERÄT FÜR VORFRITIERTE, TIEFGEFRORENE ODER FRISCHE LEBENSMITTEL
ELECTRIC APPARATUS FOR COOKING PRECOOKED, FROZEN OF FRESH FOOD PRODUCTS OF THE FRYING TYPE WITHOUT OIL BATH

(30) Priorité: 27.06.1994 FR 9407866
(43) Date de publication de la demande: 16.04.1997
(73) Titulaire: Dauliach, Michel-Henri, 03410 Premilhat (FR)
(72) Inventeur: Dauliach, Michel-Henri, 03410 Premilhat (FR)
(74) Mandataire: Obolensky, Michel
(86) Numéro de dépôt international: FR9500855
(87) Numéro de publication internationale: WO9600027

(56) Documents cités:
- WO-A-93/18349
- WO-A-93/21809
- DE-A- 3 519 964
- FR-A- 2 452 906
- FR-A- 2 682 009
- US-A- 1 993 607
- US-A- 4 173 925
- US-A- 4 450 758

## Description

La présente invention concerne un appareil de cuisson électrique ménager, de type friteuse, sans bain d'huile, n'émettant ni odeur désagréable, ni fumée, destiné plus particulièrement à être utilisé par le grand public.

L'utilisation des friteuses traditionnelles à bain d'huile, présente une telle multitude d'inconvénients (odeur désagréable de la friture qui se répand comme chacun sait partout dans les pièces et met beaucoup de temps à se dissiper, digestion difficile liée à la grande quantité d'huile absorbée par les aliments et souvent dégradée parce que trop ancienne, nettoyage contraignant de la friteuse, difficulté de rangement du fait de la présence du bain d'huile, etc..., ainsi que des risques d'utilisation (peur des débordements de la friture, de l'incendie, des brûlures, etc...), sans compter que pour obtenir une qualité satisfaisante des aliments frits, il faut changer fréquemment le bain d'huile, ce qui augmente d'une façon non négligeable le prix de revient des produits. Tout ceci fait que la plupart du grand public hésite à utiliser les appareils actuellement commercialiés sur le marché.

Le résultat d'une étude auprès du grand public tend à démontrer à ce jour, que la consommation des frites a énormément chuté uniquement à cause des désagréments causés par l'utilisation d'un bain d'huile bouillante.

L'appareil selon l'invention permet, du fait de ne plus utiliser de bain d'huile, de remédier définitivement à tous ces inconvénients ainsi qu'à tous ces risques, tout en permettant de présenter un produit plus digeste, puisque les aliments ne sont plus replongés dans aucune matière grasse. En effet, la faible pellicule d'huile restant en surface des produits alimentaires surgelés du commerce suffit à elle-même pour donner, après cuisson par rayonnement infrarouge, un aspect doré et une consistance croustillante tout en conservant une texture moelleuse à l'intérieur des aliments.

Dans le cas d'aliments crus, un système de pulvérisation contrôlée d'huile permet d'obtenir le même résultat que ci-dessus.

L'invention concerne donc un appareil de cuisson électrique ménager, ne nécessitant pas de préchauffage, avec brassage de l'air extraction forcée ou non, et pulvérisation contrôlée d'huile pour les aliments crus.

L'appareil est chauffé par des rayons infrarouges permettant de cuire sans bain d'huile, des aliments surgelés précuits du commerce tels que les frites, les beignets, les pommes dauphines, etc..., ou des aliments frais et crus tels que les frites, les châtaignes, les nems, etc... sans inconvénients et sans risques, d'une façon hygiénique et diététique.

Avant de développer la description technologique de l'invention, il est bon de décrire les distinctions qui caractérisent la cuisson par rayonnement infrarouge par rapport au mode de cuisson traditionnel par immersion dans un bain d'huile bouillante.

Lorsqu'un corps reçoit des rayons infrarouges, il les absorbe, les réfléchit, les réfracte et les diffuse. La fraction de l'énergie produite par le rayonnement infrarouge, reçue et absorbée par le corps, engendre un dégagement de chaleur dans la matière ayant reçu ce rayonnement. Cette chaleur absorbée par le corps est d'autant plus grande que l'on se rapproche du pouvoir d'absorption de ce corps.

En effet, toute substance frappée par des rayons infrarouges, absorbe une plus ou moins grande partie de l'énergie et s'échauffe. Chaque matière est caractérisée par le fait qu'elle possède un pouvoir d'absorption qui lui est propre. Plus la longueur des ondes émises par les rayons infrarouges se rapprochera de la longueur d'onde d'absorption de la matière et plus l'échauffement sera important et intense. Donc, pour chauffer efficacement un corps, il faut l'irradier par des rayons de même longueur d'ondes que la propre longueur d'ondes d'absorption de ce corps.

Pour optimiser le rendement dans notre application, la longueur des ondes émises par les rayons infrarouges sera comprise entre deux et quatre microns. Cette longueur d'ondes a la particularité d'être la même que celles émises par la braise ardente d'un feu de bois.

De plus, la température superficielle de l'émetteur sera située aux alentours de 1000°C.

La présente invention a pour but de remplacer les moyens traditionnels de cuisson dans un bain d'huile bouillante par un procédé qui grille en surface, en appliquant le principe décrit dans le paragraphe précédent dont l'avantage est également de chauffer l'air contenu dans l'enceinte, ce qui permet de cuire par convection, comme dans un four traditionnel, l'intérieur des aliments.

La conjonction simultanée de ces deux phénomèes engendre un produit fini de très haute qualité nutritive, réalisable en un temps très court (moins de cinq minutes, par exemple, pour les frites ou les pommes dauphines).

WO-93/18349 décrit un appareil de cuisson électrique ménager d'aliments, du type friteuse sans bain d'huile, sans préchauffage, à panier tournant, comprenant un corps entourant une enceinte métallique, un panier tournant amovible monté en rotation dans ladite enceinte, un moteur électrique d'entraînement du panier en rotation et un couvercle de fermeture de l'enceinte.

US-A-445 075 décrit un appareil de cuisson tournant comportant une enceinte chauffé électriquement par des tubes à quartz.

Le récipient de l'appareil est muni à l'une de ses extrémités, en regard de l'axe du moteur d'entraînement du récipient, d'un système à ressort de maintien du récipient tournant en position couchée et d'un couvercle équipé d'un système de centrage tournant du récipient tournant.

L'invention vise à créer un appareil perfectionné du type précité.

Elle a donc pour objet un appareil de cuisson électrique ménager d'aliments, précuits, surgelés ou frais de type friteuse, sans bain d'huile, sans préchauffage, à panier tournant, chauffé par rayonnement infrarouge, comprenant un corps entourant une enceinte métallique, un panier tournant amovible monté à rotation dans ladite enceinte, un moteur électrique d'entraînement du panier en rotation et un couvercle de fermeture de l'enceinte caractérisé en ce qu'il comporte par ailleurs un système à ressort de maintien du panier tournant en position couchée, le couvercle étant équipé d'un système de centrage tournant du panier tournant dont l'extrémité ouverte coopère avec ledit système de centrage tournant lors de la fermeture du couvercle, et en ce qu'il comprend ménagés dans le fond de son enceinte opposé au couvercle, une double rangée de perforations faisant partie d'un double trajet de circulation d'air respectivement à l'intérieur de l'enceinte de l'appareil et dans l'espace entre le corps et l'enceinte métallique sous l'action d'un ventilateur.

L'invention sera mieux comprise à la lecture de la description qui va suivre, donnée uniquement à titre d'exemple et faite en se référant aux dessins annexés, sur lesquels :
- la Fig.1 est une vue en élévation et en coupe de la friteuse suivant l'invention en position de travail;
- la Fig.2 est une vue en élévation du panier tournant entrant dans la construction de la friteuse suivant l'invention;
- la Fig.3 est une vue en bout du panier de la figure 2;
- la Fig.4 est une vue partielle à plus grande échelle des moyens de centrage du fond du panier;
- la Fig.5 est une vue de face du couvercle de la friteuse;
- la Fig.6 est une vue de côté en coupe du couvercle de la figure 5;
- la Fig.7 est une vue du couvercle de la figure 6;
- la Fig.8 est une vue en élévation et en coupe 8-8 de la figure 9 du réflecteur de la friteuse suivant l'invention;
- la Fig.9 est une vue de face du réflecteur de la figure 8;
- la Fig.10 est un ensemble de schémas montrant le principe d'utilisation de la friteuse suivant l'invention;
- la Fig.11 est une vue en élévation et en coupe analogue à celle de la figure 1 d'une variante de la friteuse suivant l'invention; et
- la Fig.12 est un schéma électrique de la friteuse représentée à la figure 11.

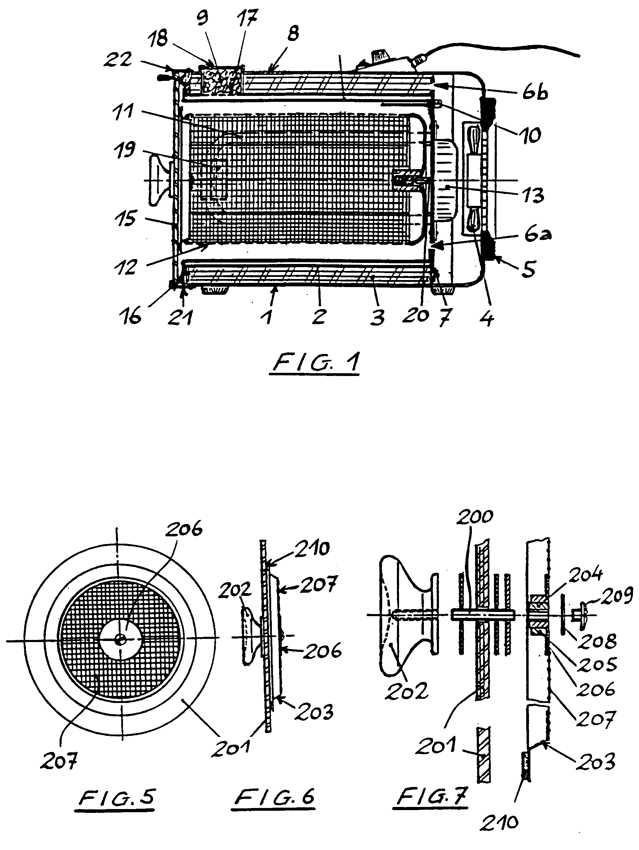

L'appareil de cuisson est constitué, selon l'invention (comme représenté à la figure 1), d'un corps en métal ou en matière plastique moulée, qui entoure une enceinte en acier inoxydable ou en aluminium, appelée paroi interne, tout en maintenant un certain espace pour permettre la dissipation de la chaleur interne par une circulation d'air convectionnelle ou forcée et la mise en place optionnelle d'un produit de calorifugeage 3. En partie avant du corps, la paroi interne et la partie extérieure forment des bords tombés et sont solidarisées par des vis ou des rivets.

Cette fixation est recouverte d'un joint en silicone préformé 16, par exemple en profil "oméga" pour permettre d'assurer l'étanchéité entre le couvercle 15, une fois fermé, et l'enceinte de cuisson de la friteuse. L'appareil peut être équipé ou non d'un système de brassage et d'extraction forcée au moyen d'un ventilateur extra-plat 4 qui a pour effet de faire pénétrer de l'air frais au travers d'un fond moulé en matière plastique 5. Cet air frais passe simultanément au travers de deux séries de perforations 6a et 6b, ménagées dans la tôle de fond 7 et est ensuite expulsé d'une part, par des orifices 8 pratiqués dans le corps dans la partie avant de la friteuse et d'autre part, au travers d'un filtre en mousse chargé de charbon actif ou en laine d'acier 9. Ce filtre est maintenu emprisonné, en partie inférieure, par un grillage 17 soudé sur la paroi interne, et par un couvercle grillagé 18 articulé ou amovible en partie supérieure. L'apport d'air extérieur permet de remplir cinq fonctions importantes. Premièrement : la partie d'air passant par les orifices 6a permet d'effectuer, à l'intérieur de l'enceinte de cuisson, un brassage de l'air ambiant, assurant ainsi une bonne répartition de la chaleur. Deuxièmement : l'extraction des vapeurs d'eau et d'huile en suspension dans l'enceinte en les forçant à être piégées par le filtre 9. Troisièmement : la partie d'air passant au travers des perforations 6b et ressortant par les orifices 8 assure un refroidissement supplémentaire de la double paroi calorifugée et du corps extérieur 1. Quatrièmement : de ralentir l'élévation de la température à l'intérieur de l'enceinte de cuisson, retardant ainsi l'action du thermostat de sécurité 10, réglé, à environ deux cent cinquante degrés. Cinquièmement : en positionnant verticalement la friteuse, il permet de réduire considérablement le temps de refroidissement de l'appareil avant son rangement.

Le corps est pourvu de chaque côté de deux poignées 19 en bakélite fixées par vis ou par rivets. Le fond 5 est pourvu de bossages sur lesquels vient se poser l'appareil en position verticale. Pour maintenir l'appareil en position horizontale, il est prévu trois pieds en matière plastique. La présence des poignées, des bossages du fond ainsi que des trois pieds sont d'une importance capitale comme on le verra dans la partie de la description consacrée au principe d'utilisation de l'appareil. Elle représente une des bases de l'invention.

La cuisson est réalisée au moyen de tubes en quartz de silicone 11 en forme de "U", à rayonnement infrarouge dont la longueur d'ondes, comme indiqué précédemment, est comprise entre deux et quatre microns. Les tubes sont fixés sur une platine qui elle-même est solidarisée, par rivetage à la tôle de fond du corps.

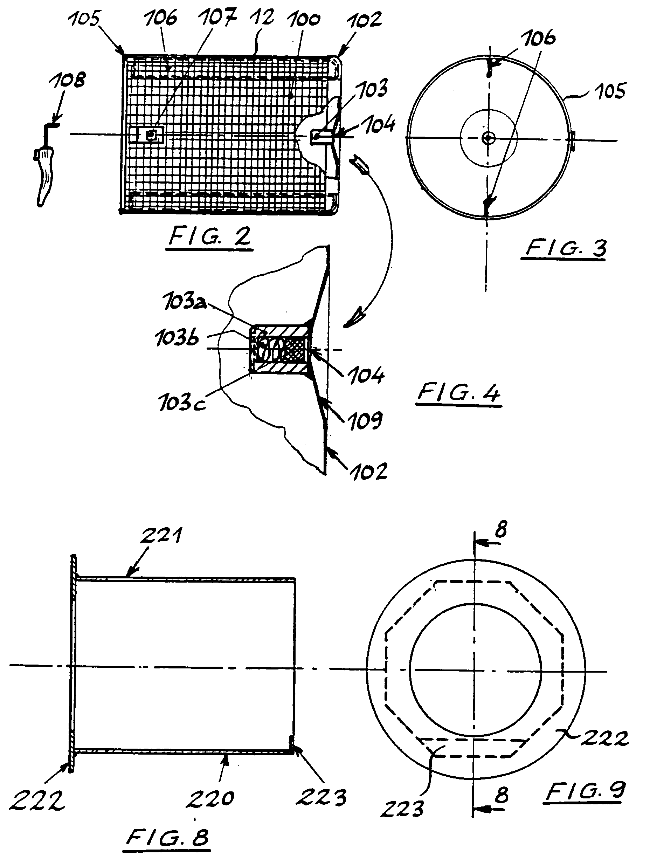

A l'intérieur de l'enceinte de l'appareil, est introduit un panier tournant amovible 12 constitué selon la figure 2, par un corps de forme cylindrique 100 en métal ajouré ou en grillage à mailles plus ou moins fines serti ou soudé sur un fond méllatique 102 à bord tombé pour favoriser le nettoyage. Au centre du fond, est pratiquée une petite empreinte emboutie en forme de cône 109 pour favoriser le centrale et la pénétratin de l'axe du moteur d'entraînement. Derrière cette empreinte, est soudé un petit mécanisme à ressort composé d'une douille métallique 103a dans laquelle sont emprisonnés un ressort de compression 103b et un guide coulissant en métal autolubrifié 103c. Le but de ce petit mécanisme est, lorsque le couvercle est fermé, de maintenir une force suffisante pour éviter au panier de sortir du guide de centrage 103 lorsqu'il est en cours de rotation. Le centre de ce fond 102 est percé d'un trou 104 de forme carrée, de mêmes dimensions que l'axe également carré du moteur électrique d'entraînement. En partie avant du corps 101 du panier, est soudé un cercle en fil métallique 105 ayant pour but de supprimer les risques de blessures et pour permettre le maintien du panier en position horizontale en venant se positionner dans le guide de centrage 103, lors de la fermeture du couvercle 3. Le panier est équipé d'au moins deux entretoises longitudinales 106 (Fig.3) réalisées en grillage métallique, bordé par soudure, d'un fil également métallique ou réalisé par emboutissage dans le corps.

Ces entretoises ont pour fonction primordiale de retourner les aliments en cours de cuisson pour les exposer au maximum au rayonnement infrarouge. Pour extraire le panier, il est soudé sur la partie avant du grillage, une petite tôle préformée standard 107, du commerce. La poignée 108 est également standard et du commerce.

Le panier 12 tourne sur lui-même autour de son grand axe au moyen d'un petit moteur électrique 13 (Fig.1) fixé à l'arrière de la tôle de fond du corps de l'appareil par des vis ou des rivets. Le panier est maintenu et entraîné à sa partie arrière par l'axe carré 20 du moteur électrique et guidé sur sa face avant par un système de centrage tournant, solidaire du couvercle 15 de la friteuse. Comme représenté à la figure 5, ce couvercle comprend un disque en verre 201, à l'avant duquel est vissé un bouton en bakélite 202 servant de poignée. La partie interne du couvercle est constituée d'un ensemble de centrage tournant. Cet ensemble est formé d'un axe métallique taraudé 200, portant une douille métallique 204, autour de laquelle tourne une douille également métallique 205, plus courte, soudée à une grosse rondelle 206 elle-même soudée à un disque en grillage 207 et lui-même soudé à une collerette de guidage 203 dont la face parallèle au disque en verre peut être équipée de patins en téflon 210, favorisant ainsi le glissement de l'ensemble en cours de rotation. Le tout est maintenu en position par une rondelle 208 et une vis 209 en acier inoxydable. Le couvercle et maintenu fermé par deux étriers métalliques 21 (Fig.1) fixes rivetés ou soudés au corps 1 et par un système de fermeture 22 pouvant être réalisé par une petite languette métallique préformée en "Z" et emmanchée à une extrémité dans une petite poignée en matière plastique protégeant ainsi de la chaleur.

Entre l'enceinte intérieure et les résistances infrarouges 11, il est prévu une virole octogonale amovible 220 (Fig.8) en métal préformé dont la face intérieure est polie "miroir", formant réflecteur et permettant un nettoyage aisé des salissures dûes aux projections alimentaires. Cette virole est percée en sa partie supérieure d'un trou rectangulaire 221 pour permettre le passage de l'air vers le filtre. En face avant du réflecteur, est soudée une couronne métallique 222 dont le but est de guider l'introduction du panier tout en protégeant, d'un éventuel choc, les résistances en quartz de silice. A l'arrière de la partie inférieure de la virole 220, il est prévu un pli, formant rebord 223. La partie inférieure du réflecteur forme de ce fait un lèchefrite pour récupérer les éventuels condensats.

L'alimentation des résistances et le temps de cuisson sont commandés par un minuteur mécanique ou électronique qui coupe la cuisson lors de son retour à sa position intiale. La température à l'intérieur de l'enceinte est limitée à environ 250° par l'interposition entre le minuteur et les résistances d'un thermostat 10 (Fig.1) assurant en même temps la sécurité thermique de l'appareil.

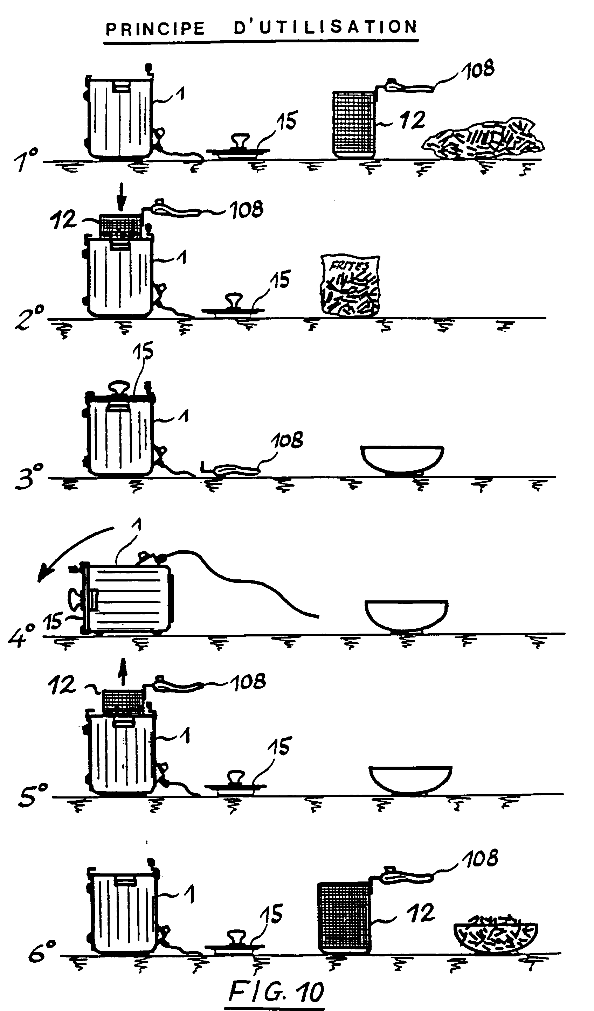

La présente invention nécessite de décomposer, le principe d'utilisation de l'appareil en se reportant à la figure 10.
1) Après avoir branché la friteuse en position verticale, ôter le couvercle 15, sortir le panier 12 en utilisant la poignée amovible 108.
2) Verser dans le panier la quantité d'aliments à cuire, puis réintroduire le panier dans la friteuse en effectuant un léger mouvement de rotation pour permettre à l'axe carré du moteur d'entraînement d'entrer dans le fond du panier.
3) Remettre le couvercle 15.
4) Basculer la friteuse en positon horizontale puis tourner le minuteur jusqu'au temps de cuisson désiré.
5) En fin de cuisson, redresser la friteuse en position verticale, enlever le couvercle 15, sortir le panier 12 en utilisant toujours la poignée amovible 108.
6) Verser les aliments cuits dans un récipient, puis servir.

Le fait de basculer puis de redresser la friteuse en cours d'utilisation, représente une des caractéristiques de l'invention.

L'appareil selon l'invention est principalement destiné au grand public. En augmentant simplement ses dimensions, et en utilisant des aciers ou des matières dits " de qualité alimentaire", il peut intéresser les professionnels de la restauration rapide qui sont confrontés aux mêms inconvénients et aux mêmes risques que ceux rencontrés par les particuliers.

L'invention permet également, en apportant quelques modifications, de cuire des grillades telles que de steaks hachés, etc...

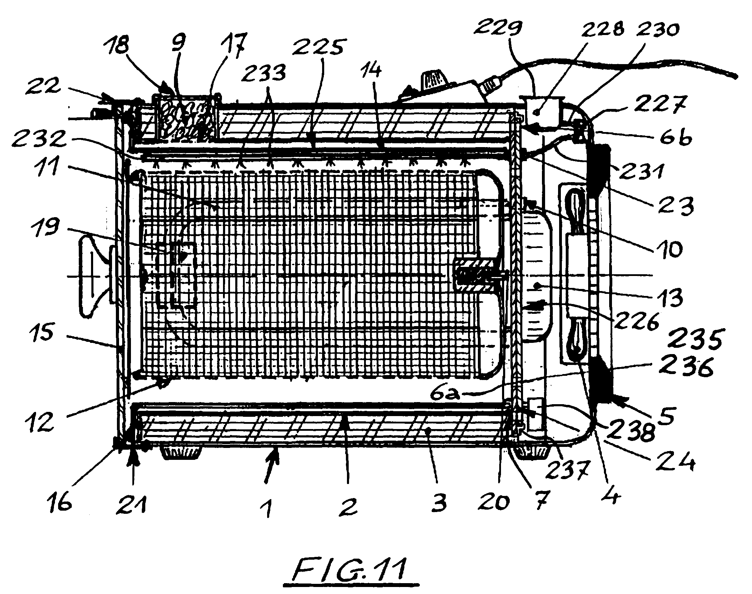

Sur la figure 11, on a représenté une variante de la friteuse suivant l'invention dont les parties communes avec celles de la friteuse de la figure 1 portent les mêmes numéros de référence.

Selon cette variante, pour permettre de cuire également les aliments crus, il est prévu un système 225 de pulvérisation d'huile, ainsi qu'un mécanisme 226 d'obturation du circuit d'air intérieur.

Le système de pulvérisation 225 est composé d'une petite pompe électrique à membrane 227 placée à l'arrière du fond de l'enceinte de cuisson. Elle est alimentée par un petit réservoir en matière plastique 228 muni d'un couvercle de remplissage étanche 229 placé en partie haute lorsque la friteuse est en position couchée, horizontale de fonctionnement. Deux tuyaux en matière plastique 230,231 alimentent en amont la pompe et en aval une rampe de pulvérisation 232.

La rampe de pulvérisation 232 constituée d'un tube en métal dans lequel est pratiquée une série de petits trous équidistants 233 le long d'une génératrice, est fixée en partie haute de la friteuse en position couchée au moyen d'une rondelle soudée au tube et d'un écrou prenant en sandwich le fond de l'enceinte de cuisson. L'extrémité de la rampe opposée au tuyau 231 est obturée. Les trous 233 sont orientés vers le bas de la friteuse.

Le mécanisme d'obturation 226 est composé d'une couronne métallique perforée tournante 235, percée d'orifices 236 de mêmes dimensions que les orifices 6a du fond de l'enceinte de cuisson. Elle est placée juste derrière ce fond. Cette couronne tournante est guidée par une bague circulaire 237 à profil en "Z", soudée sur le fond de l'enceinte. Il subsiste un léger jeu pour permettre à la couronne 235 de tourner librement. Cette couronne est actionnée par un petit électro-aiment 238 placé à proximité sur le fond de l'enceinte. Lorsque celui-ci est au repos, les orifices 6a et 236 sont face à face et l'air de brassage et d'expulsion passe.

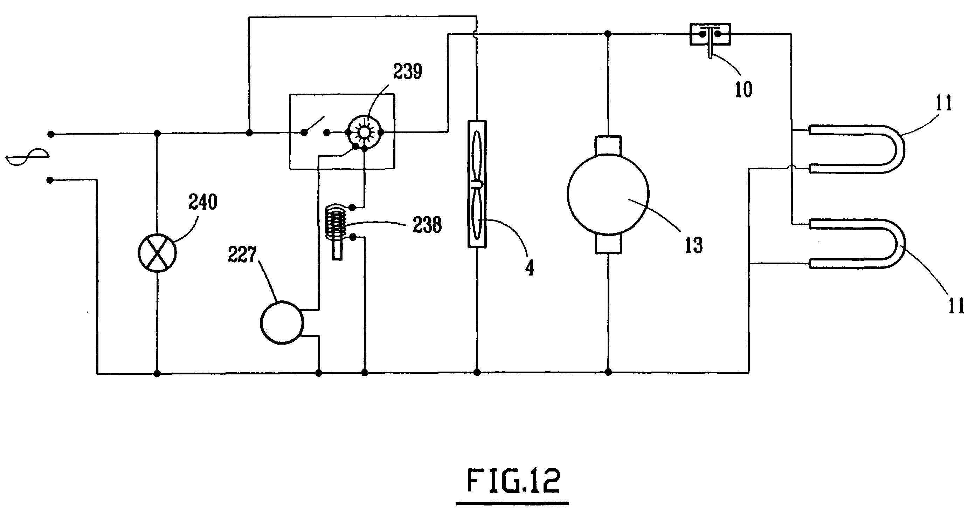

Sur la figure 12, on a représenté le schéma électrique de la friteuse de la figure 11.

On voit sur cette figure, les résistances électriques 11 alimentées par le secteur par l'intermédiaire du minuteur 239 et du thermostat 10.

Le moteur électrique 13 d'entraînement en rotation du panier 12 est connecté en parallèle sur le thermostat 10 et les résistances 11.

Le ventilateur 4 est alimenté directement par le secteur.

La pompe à membrane 227 et l'électro-aimant 238 de commande de la couronne 235 d'obturation des orifices 6a du fond de la friteuse sont eux aussi alimentés par le secteur par l'intermédiaire du minuteur 239 pendant des portions du temps de cuisson qui correspondent respectivement au maintien dans la friteuse d'une quantité de vapeur d'eau nécessaire à la cuisson des aliments et à une opération de friture.

Enfin, un voyant 240 de mise sous tension est connecté à l'entrée du circuit.

L'opération de cuisson consiste au cours d'une première phase à positionner le minuteur 239 sur une position correspondant à la cuisson de "PRODUITS CRUS", ce qui a pour effet de couper la partie d'air traversant l'enceinte de cuisson et de précuire les aliments en utilisant leur propre humidité. Au bout d'un certain temps, lorsque les produits sont presque cuits, mais encore suffisamment rigides pour ne pas se rompre (surtout les frites), le minuteur 239 actionne d'une part l'électro-aimant 238 qui commande l'entrée de l'air de brassage et permet d'expulser l'humidité accumulée dans l'enceinte de cuisson, et d'autre part, la petite pompe électrique à membrane 227 qui envoie à partir de la réserve d'huile 228, une petite quantité de matière grasse dans la rampe de pulvérisation 232. Les produits alimentaires sont de cette manière enrobés d'une fine pellicule de matière grasse se répartissant uniformément sous l'effet du brassage. Cette deuxième phase a pour but de transformer les aliments d'aspects bouillis en produits frits et croustillants.

## Revendications

1. Appareil de cuisson électrique ménager d'aliments, précuits, surgelés ou frais de type friteuse, sans bain d'huile, sans préchauffage, à panier tournant, chauffé par rayonnement infrarouge, comprenant un corps entourant une enceinte métallique (2), un panier tournant amovible (12) monté à rotation dans ladite enceinte, un moteur électrique (13) d'entraînement du panier en rotation et un couvercle (15) de fermeture de l'enceinte caractérisé en ce qu'il comporte par ailleurs un système à ressort (103a,103b, 103c) de maintien du panier tournant (12) en position couchée, le couvercle (15) étant équipé d'un système (203,204,205,206,207) de centrage tournant du panier tournant (12) dont l'extrémité ouverte coopère avec ledit système de centrage tournant lors de la fermeture du couvercle (15), et en ce qu'il comprend ménagés dans le fond de son enceinte (7) opposé au couvercle, une double rangée de perforations (6a,6b) faisant partie d'un double trajet de circulation d'air (6a,221, 9,18; 6b,8) respectivement à l'intérieur de l'enceinte de l'appareil et dans l'espace entre le corps et l'enceinte métallique (2) sous l'action d'un ventilateur (4).

2. Appareil de cuisson suivant la revendication 1, caractérisé en ce que le corps comporte des bossages de maintien de l'appareil en position verticale de mise en place du panier tournant dans le corps et de retrait hors de celui-ci et des pieds de maintien de l'appareil en position horizontale de fonctionnement.

3. Appareil de cuisson suivant l'une des revendications 1 et 2, caractérisé en ce que le système à ressort de maintien du panier tournant (12) en position couchée comporte au centre du fond du panier tournant (12), une empreinte conique (109) de centrage de l'arbre du moteur (13) d'entraînement du panier tournant, une douille métallique (103a) emprisonnant un ressort de compression (103b) et un guide coulissant autolubrifié (103c), la douille métallique (103a) étant fixée par soudage en regard d'un trou (104a) ménagé dans le fond (102) du panier dans le centre de l'empreinte conique (109), le trou (104) ayant une forme carrée complémentaire de celle de l'arbre de sortie du moteur d'entraînement (13).

4. Appareil de cuisson suivant l'une des revendications 1 à 3, caractérisé en ce que le système de centrage tournant du panier (12) par rapport au couvercle (15) comporte montée sur un disque (201) pourvu d'un bouton (202) formant poignée, une collerette de guidage (203) destinée à coopérer avec un cercle (105) soudé à l'extrémité ouverte du panier, montée à rotation par rapport au disque (201) par l'intermédiaire d'une douille métallique (205) portée par un axe métallique et rendue solidaire de la collerette (203) par un disque en grillage (207) soudé à la collerette de guidage (203) et relié à la douille par une rondelle (206), elle-même soudée au disque en grillage (207).

5. Appareil de cuisson suivant la revendication 4, caractérisé en ce que la collerette de guidage (203) est une collerette métallique dont la partie en regard du disque (201) est équipée de patins (210) dont la partie intermédiaire est conique et dont l'aile opposée au disque (201) est soudée au disque en grillage (207).

6. Appareil de cuisson suivant l'une des revendications 1 à 5, caractérisé en ce que le panier tournant amovible (12) est constitué d'un corps cylindrique (100) en métal ajouré ou grillage, fixé à un fond en métal embouti( 102) au centre duquel est pratiquée ladite empreinte conique (109), favorisant la pénétration de l'arbre du moteur d'entraînement (13), l'extrémité ouverte du corps comportant le cercle en fil métallique (105) soudé pour le maintien et le centrage du panier en position horizontale.

7. Appareil de cuisson suivant l'une des revendications 1 à 6, caractérisé en ce que le panier tournant (12) comporte au moins deux organes (6) de retournement des aliments en cours de cuisson, lors de la rotation du panier tournant (12), lesdits organes de retournement étant réalisés en grillage métallique et bordés sur leur périphérie par un fil métallique soudé.

8. Appareil de cuisson suivant l'une des revendications 1 à 7, caractérisé en ce que le chauffage est obtenu au moyen de sources de rayonnement (11) émettant un rayonnement d'une longueur d'onde de quelques microns.

9. Appareil de cuisson suivant la revendication 8, caractérisé en ce que les sources de rayonnement sont des tubes de quartz de silice réalisés en forme de "U" et présentant une longueur d'onde comprise entre deux et quatre microns.

10. Appareil de cuisson suivant l'une des revendications 1 à 9, caractérisé en ce qu'il comporte en outre un réflecteur amovible (14) intercalé entre les sources de rayonnement (11) et l'enceinte métallique (2) de l'appareil.

11. Appareil de cuisson suivant la revendication 8, caractérisé en ce que le double trajet de circulation d'air comprend un premier trajet comportant des premières perforations (6a) du fond de l'enceinte (2), l'intérieur de ladite enceinte et un filtre (9) monté entre l'enceinte métallique (2) et la paroi latérale du corps de l'appareil et un second trajet comportant des secondes perforations (6b), l'espace entre l'enceinte métallique (2) et ce corps (1) de l'appareil et un orifice (8) pratiqué dans le corps.

12. Appareil de cuisson suivant l'une des revendications 10 et 11 caractérisé en ce que le réflecteur amovible (14) est formé d'une virole (220) de forme hexagonale ou octogonale en métal dont la face interne, côté panier tournant (12) et polie comme un miroir, ledit réflecteur étant pourvu d'une couronne métallique soudée (222) et en ce qu'à son extrémité opposée à ladite couronne, la virole (220) comporte un pli formant rebord, la paroi de la virole pourvu dudit rebord( 223) constituant un lèchefrite.

13. Appareil de cuisson suivant l'une des revendications 9 à 12, caractérisé en ce que ledit réflecteur (14) comporte un trou (221) disposé en regard du filtre (9) faisant partie dudit premier trajet de circulation d'air (6a,221,9,18).

14. Appareil de cuisson suivant l'une des revendications 2 à 13, caractérisé en ce qu'il comporte en outre un système de pulvérisation d'huile (225) commandé par le minuteur (239) de l'appareil et comportant une rampe de pulvérisation (232) logée dans la partie haute de l'appareil lorsque celui-ci se trouve en position horizontale de fonctionnement, ladite rampe (292) étant alimentée par une pompe à membrane (227) à partir d'un réservoir d'huile (228) à couvercle étanche (229) placé à la partie supérieure de l'appareil lorsqu'il se trouve en position horizontale.

15. Appareil de cuisson suivant l'une des revendications 1 à 14, caractérisé en ce qu'il comporte en outre un mécanisme (226) d'obturation du premier trajet (6a, 221, 9, 18) de circulation d'air comprenant une couronne tournante (235) percée d'orifices (226) de mêmes dimensions que les premières perforations (6a) du fond de l'enceinte et actionnée par un électro-aimant (238) sous la commande du minuteur (239) de l'appareil.

## Claims

1. Domestic electric cooking apparatus for cooking food, precooked dishes or frozen or fresh food, of the deep-fat fryer type, without an oil bath, with no pre-heating, with a rotary basket, heated by infra-red radiation, comprising a body surrounding a metal container (2), a removable rotary basket (12) rotatably mounted in said container, an electric drive motor (13) for rotating the basket and a lid (15) for closing the container, characterised in that it further comprises a spring system (103a, 103b, 103c) for holding the rotary basket (12) in the reclining position, the lid (15) being equipped with a rotary centring system (203, 204, 205, 206, 207) for the rotary basket (12) the open end of which co-operates with said rotary centring system during closure of the lid (15), and in that it comprises, provided in the bottom of its container (7), opposite the lid, a double row of perforations (6a, 6b) forming part of a double air circulation path (6a, 221, 9, 18; 6b, 8) respectively inside the container of the apparatus and in the space between the body and the metal container (2), under the action of a blower (4).

2. Cooking apparatus according to claim 1, characterised in that the body comprised bosses for holding the apparatus in the vertical position for placing the rotary basket in the body and removing it therefrom and feet for holding the apparatus in the horizontal operating position.

3. Cooking apparatus according to one of claims 1 and 2, characterised in that the spring system for holding the rotary basket (12) in the reclining position comprises, in the centre of the base of the rotary basket (12), a conical indentation (109) for centring the shaft of the drive motor (13) for the rotary basket, a metal bush (103a) trapping a compression spring (103b) and a self-lubricating sliding guide (103c), the metal bush (103a) being fixed by welding opposite a hole (104a) provided in the bottom (102) of the basket in the centre of the conical indentation (109), the hole (104) being square in shape to match the shape of the output shaft of the drive motor (13).

4. Cooking apparatus according to one of claims 1 to 3, characterised in that the rotary centring system for centring the basket (12) relative to the lid (15) comprises, mounted on a disc (201) provided with a button (202) forming a handle, a guide collar (203) intended to cooperate with a circle (105) welded onto the open end of the basket, rotatably mounted relative to the disc (201) via a metal bush (205) carried by a metal spindle and attached to the collar (203) by a mesh disc (207) welded to the guide collar (203) and connected to the bush by a washer (206) which is in turn welded to the mesh disc (207).

5. Cooking apparatus according to claim 4, characterised in that the guide collar (203) is a metal collar wherein the part facing the disc (201) is fitted with blocks (210), the intermediate part of which is conical while the flange opposite the disc (201) is welded to the mesh grill (207).

6. Cooking apparatus according to one of claims 1 to 5, characterised in that the removable rotary basket (12) consists of a cylindrical body (100) of perforated metal or mesh, fixed to a base of stamped metal (102) in the centre of which is formed said conical indentation (109), facilitating the penetration of the shaft of the drive motor (13), the open end of the body comprising the circle of metal wire (105) welded to secure and centre the basket in the horizontal position.

7. Cooking apparatus according to one of claims 1 to 6, characterised in that the rotary basket (12) comprises at least two means (6) for turning the food during cooking, as the rotary basket (12) rotates, said turning means being made of metallic mesh and edged around the outside with a welded metal wire.

8. Cooking apparatus according to one of claims 1 to 7, characterised in that the heating is obtained by means of radiation sources (11) emitting radiation with a wavelength of a few microns.

9. Cooking apparatus according to claim 8, characterised in that the radiation sources are "U"-shaped silica quartz tubes having a wavelength of between two and four microns.

10. Cooking apparatus according to one of claims 1 to 9, characterised in that it further comprises a removable reflector (14) interposed between the radiation sources (11) and the metal container (2) of the apparatus.

11. Cooking apparatus according to claim 8, characterised in that the double air circulation path has a first path comprising first perforations (6a) in the bottom of the container (2), the inside of said container and a filter (9) mounted between the metal container (2) and the side wall of the body of the apparatus, and a second path comprising second perforations (6b), the space between the metal container (2) and this body (1) of the apparatus and an opening (8) provided in the body.

12. Cooking apparatus according to one of claims 10 and 11, characterised in that the removable reflector (14) is formed by a hexagonal or octagonal metal shroud (220) the inner surface of which, facing the rotary basket (12), and polished like a mirror, said reflector being provided with a welded metal crown (222), and in that at its end opposite said crown, the shroud (220) comprises a fold forming an edge, the wall of the shroud comprising said edge (223) constituting a drip catcher.

13. Cooking apparatus according to one of claims 9 to 12, characterised in that the reflector (14) comprises a hole (221) located opposite the filter (9) forming part of the first air circulation path (6a, 221, 9, 18).

14. Cooking apparatus according to one of claims 2 to 13, characterised in that it further comprises a system for spraying oil (225) controlled by the timer (239) of the apparatus and having a spraying rail (232) housed in the top part of the apparatus when the latter is in the horizontal operating position, said ramp (292) being supplied by a diaphragm pump (227) from an oil reservoir (228) with a leaktight lid (229) placed in the upper part of the apparatus when it is in the horizontal position.

15. Cooking apparatus according to one of claims 1 to 14, characterised in that it further comprises a mechanism (226) for sealing the first air circulation path (6a, 221, 9, 18) comprising a rotary crown (235) pierced with openings (226) of the same dimensions as the first perforations (6a) in the bottom of the container and operated by an electromagnet (238) under the control of the timer (239) of the apparatus.

## Patentansprüche

1. Elektrische Kochvorrichtung für vorgekochte, tiefgefrorene oder frische Lebensmittel vom Friteusen-Typ, ohne Ölbad, ohne Vorheizung, mit Drehkorb, geheizt durch Infrarotstrahlung, aufweisend einen Körper, der eine Metallhülle (2) umgibt, einen entfernbaren Drehkorb (12), der in der Hülle drehbar angebracht ist, einen Elektromotor (13) zum Drehantreiben des Korbs, und einen Deckel (15) zum Verschließen der Hülle, dadurch gekennzeichnet, daß sie außerdem ein Federsystem (103a, 103b, 103c) zum Halten des Drehkorbs (12) in Ruhestellung aufweist, wobei der Deckel (15) mit einem System (203, 204, 205, 206, 207) zur Drehzentrierung des Drehkorbs (12) versehen ist, dessen offenes Ende mit dem Drehzentriersystem beim Schließen des Deckels (15) zusammenwirkt, und daß sie im Boden der Hülle (17) in Gegenüberlage zu dem Deckel eine doppelte Reihe von Perforationen (6a, 6b) aufweist, die Teil einer doppelten Luftzirkulationsbahn (6a, 221, 9, 18; 6b, 8) im Innern der Hülle der Vorrichtung bzw. in dem Raum zwischen dem Körper und der Metallhülle (2) unter Wirkung eines Ventilators (4) bildet.

2. Kochvorrichtung nach Anspruch 1, dadurch gekennzeichnet, daß der Körper Wulste zum Halten der Vorrichtung in vertikaler Stellung zum Anordnen des Drehkorbs in dem Körper und zum Herausnehmen aus diesem und Füsse zum Halten der Vorrichtung in horizontaler Funktionsstellung aufweist.

3. Kochvorrichtung nach Anspruch 1 oder 2, dadurch gekennzeichnet, daß das Federsystem zum Halten des Drehkorbs (12) in Ruhestellung im Zentrum des Bodens des Drehkorbs (12) eine konische Eindrückung (109) zur Zentrierung der Welle des Motors (13) zum Antreiben des Drehkorbs und eine Metallbuchse (103a), welche eine Druckfeder (103b) und eine selbstschmierende Gleitführung (103c) aufweist, wobei die Metallbuchse (103a) relativ zu einem Loch (104a) durch Schweißen fixiert ist, welches Loch im Boden (102) des Korbs im Zentrum der konischen Eindrückung (109) vorgesehen ist, wobei das Loch (104) eine quadratische Form komplementär zu derjenigen der Abtriebswelle des Antriebsmotors (13) aufweist.

4. Kochvorrichtung nach einem der Ansprüche 1 bis 3, dadurch gekennzeichnet, daß das System zur Drehzentrierung des Korbs (12) relativ zu dem Deckel (15) angebracht auf einem Teller (201), der mit einem einen Griff bildenden Knopf (202) versehen ist, einen Führungskragen (203) aufweist, der dazu bestimmt ist, mit einem an das offene Ende des Korbs geschweißten Ring (105) zusammenzuwirken, der relativ zu dem Teller (201) unter Zwischenschaltung einer Metallbuchse (205) drehbar angebracht ist, welche durch eine Metallachse getragen und mit dem Kragen (203) durch einen Grillteller (207) fest verbunden ist, der an den Führungskragen (203) geschweißt und mit der Buchse durch eine Ringscheibe (206) verbunden ist, die ihrerseits an den Grillteller (207) geschweißt ist.

5. Kochvorrichtung nach Anspruch 4, dadurch gekennzeichnet, daß der Führungskragen (203) ein Metallkragen ist, dessen zum Teller (201) weisender Teil mit Kufen (210) versehen ist, deren mittlerer Teil konisch ist und deren dem Teller (201) gegenüberliegender Flügel an den Grillteller (207) geschweißt ist.

6. Kochvorrichtung nach einem der Ansprüche 1 bis 5, dadurch gekennzeichnet, daß der herausnehmbare Drehkorb (12) aus einem durchbrochenen oder gitterförmigen zylindrischen Metallkörper (100) besteht, der an einem tiefgezogenen Metallboden (102) befestigt ist, in dessen Zentrum die konische Eindrückung (109) gebildet ist, welcher das Eindringen der Welle des Antriebsmotors (13) begünstigt, wobei das offene Ende des Körpers den angeschweißten Ring aus Metalldraht (105) zum Halten und Zentrieren des Korbs in horizontaler Stellung aufweist.

7. Kochvorrichtung nach einem der Ansprüche 1 bis 6, dadurch gekennzeichnet, daß der Drehkorb (12) zumindest zwei Organe (6) zum Wenden der Lebensmittel im Verlauf des Kochens während des Drehens des Drehkorbs (12) aufweist, wobei die Organe zum Wenden aus einem Metallgitter verwirklicht und auf ihrer Peripherie durch ein angeschweißtes Metallnetz begrenzt sind.

8. Kochvorrichtung nach einem der Ansprüche 1 bis 7, dadurch gekennzeichnet, daß das Heizen mittels Strahlungsquellen (11) bewirkt wird, welche langwellige Strahlung von einigen Mikrometern emittieren.

9. Kochvorrichtung nach Anspruch 8, dadurch gekennzeichnet, daß die Strahlungsquellen Siliciumquarzröhren sind, die U-Form aufweisen und eine Wellenlänge bereitstellen, die zwischen zwei und vier Mikrometern beträgt.

10. Kochvorrichtung nach einem der Ansprüche 1 bis 9, dadurch gekennzeichnet, daß sie außerdem einen abnehmbaren Reflektor (14) aufweist, der zwischen den Strahlungsquellen (11) und der Metallhülle (2) der Vorrichtung angeordnet sind.

11. Kochvorrichtung nach Anspruch 8, dadurch gekennzeichnet, daß die doppelte Luftzirkulationsbahn eine erste Bahn aufweist, welche die ersten Perforationen (6a) des Bodens der Hülle (2), das Innere der Hülle und einen Filter (9) aufweist, der in der Metallhülle (2) angebracht ist, und die Seitenwand des Körpers der Vorrichtung, und einen zweiten Strahl, welcher die zweiten Perforationen (6b), den Raum zwischen der Metallhülle (2) und diesen Körper (1) der Vorrichtung und eine Öffnung (8) aufweist, die in dem Körper gebildet ist.

12. Kochvorrichtung nach Anspruch 10 oder 11, dadurch gekennzeichnet, daß der entfernbare Reflektor (14) aus einem Reif (220) in sechseckiger oder achteckiger Form aus Metall gebildet ist, dessen Innenseite angrenzend an den Drehkorb (12) mit einer Spiegelpolierung versehen ist, wobei der Reflektor mit einem geschweißten Metallkranz (222) versehen ist, und daß der Reif (220) in seinem dem Kranz gegenüberliegenden Ende einen einen Rand bildenden Falz aufweist, wobei die Wandung des mit dem Rand (223) versehenen Reifs eine Tropfschale bildet.

13. Kochvorrichtung nach einem der Ansprüche 9 bis 12, dadurch gekennzeichnet, daß der Reflektor (14) ein Loch (221) aufweist, das relativ zum Filter (9) angeordnet ist, und einen Teil der ersten Luftzirkulationsbahn (6a, 221, 9, 18) bildet.

14. Kochvorrichtung nach einem der Ansprüche 2 bis 13, dadurch gekennzeichnet, daß sie außerdem ein System (225) zum Sprühen von Öl aufweist, das durch die Zeitschaltuhr (239) der Vorrichtung gesteuert ist, und eine Sprührampe (232) aufweist, die in dem oberen Teil der Vorrichtung angeordnet ist, wenn diese sich in horizontaler Funktionsstellung befindet, wobei die Rampe (292) durch eine Membranpumpe (227) ausgehend von einem Ölvorratsbehälter (228) mit einem dichten Deckel (229) versorgt wird, der auf dem oberen Teil der Vorrichtung angebracht ist, wenn diese sich in horizontaler Betriebsstellung befindet.

15. Kochvorrichtung nach einem der Ansprüche 1 bis 14, dadurch gekennzeichnet, daß sie außerdem einen Mechanismus (226) zum Blockieren der ersten Luftzirkulationsbahn (6a, 221, 9, 18) aufweist, welcher einen Drehkranz (225) aufweist, der mit Durchbrüchen (226) derselben Abmessungen durchbohrt ist wie die ersten Perforationen (6a) des Bodens der Höhle und betätigt ist durch einen Elektromotor (238) zur Steuerung der Zeitschaltuhr (239) der Vorrichtung.
